# EUROPÄISCHE PATENTSCHRIFT

(11) **EP 0 936 052 B1**
(45) Veröffentlichungstag und Bekanntmachung des Hinweises auf die Patenterteilung: **08.05.2002**
(21) Anmeldenummer: 99100903.6
(22) Anmeldetag: 20.01.1999
(51) Int. Cl.: B29C 47/90

(54) **Vorrichtung zur Kalibrierung von Hohlkammerplatten-Extrudatsträngen aus thermoplastischem Kunststoff**
Apparatus for calibrating extruded hollow plastic panels
Dispositif pour la calibration de profilés creux extrudés en matière plastique

(30) Priorität: 04.02.1998 DE 19804235
(43) Veröffentlichungstag der Anmeldung: 18.08.1999
(73) Patentinhaber: Röhm GmbH & Co. KG, 64293 Darmstadt (DE)
(72) Erfinder: Meier-Kaiser, Michael Dr., 64665 Alsbach-Hähnlein (DE)

(56) Entgegenhaltungen:
- DE-A- 2 062 378
- FR-A- 2 386 408
- US-A- 5 340 295
- US-A- 5 645 861
- US-A- 5 807 516
- PATENT ABSTRACTS OF JAPAN vol. 010, no. 191 (M-495), 4. Juli 1986 & JP 61 035928 A (MITSUBISHI KASEI VINYL CO), 20. Februar 1986

## Beschreibung

Die Erfindung betrifft eine Vorrichtung zur Kalibrierung von Hohlkammerplatten-Extrudatsträngen aus thermoplastischem Kunststoff sowie Hohlkammerplatten, die auf einer Extrusionsanlage mit einer erfindungsgemäßen Kalibriervorrichtung hergestellt sind.

### Stand der Technik

DE-C 32 44 953 oder EP-B 158 951 beschreiben sogenannte Vakuumformkanäle, die zur Kalibrierung von Hohlkammerprofilen aus thermoplastischem Kunststoff verwendet werden. Dabei wird das einstückig extrudierte Hohlkammerprofil durch einen Kanal aus zwei, mit Vakuumkanälen beaufschlagten Kühlplatten geführt. Einem Einsacken des Hohlkammerprofils durch die Einwirkung der Schwerkraft während der Abkühlphase wird durch die aus der Druckdifferenz zwischen dem Innenraum des Hohlkammerprofils und dem Außenbereich resultierende Stützkraft entgegengewirkt.

DE 3 526 752 beschreibt ein Verfahren und eine Vorrichtung zur Herstellung von Hohlkammerplatten aus Kunststoff, wobei Ober- und Untergurt extrudiert und mit vorgefertigten Stegen verschweißt werden. Ober- und Untergurte werden mittels Vakuumkalibratoren angesaugt und gekühlt. Das Verfahren hat den Vorteil, daß beliebige Steganordnungen realisiert und auch verschiedene Kunststoffe in den Hohlkammerprofilen miteinander kombiniert werden können.

DE-U 9 014 968 beschreibt ein Verfahren und eine Vorrichtung zur Extrusion von Hohlkammerplatten aus thermoplastischem Kunststoff. Dabei werden die Gurte und die Stege des Profils getrennt extrudiert und noch im thermoplastischen Zustand miteinander verschweißt. Dadurch soll Einfallstellen entgegengewirkt werden, die durch thermische Kontraktion der Stege während der Abkühlphase insbesondere bei der einstückigen Extrusion auftreten können. Das so erhaltene Hohlkammerplattenprofil wird unmittelbar anschließend durch eine Kalibriereinrichtung mit einem oberen und einem unteren Endlosband geführt, die vorzugsweise aus Metall bestehen. Zur Wärmeabfuhr dienen sich oberhalb bzw. unterhalb der Endlosbänder befindende Kühlplatten, durch die ein Kühlmittel strömt. Um die Endlosbänder in einem guten Kontakt mit den Kühlplatten zu halten und um die Endlosbänder in einem festgelegten, gleichbleibenden Abstand zu führen, können die Kühlplatten mit Vakuumkanälen versehen sein, über die Endiosbänder angesaugt werden. Die angewandte Kalibrierungsmethode hat den Nachteil, daß das Hohlkammerprofil nicht gegenüber schwerkraftsbedingtem Einsacken durch Vakuumkräfte gestützt wird, so daß eine Anwendung für einstückig extrudierte Hohlkammerprofile nicht infrage kommt.

Gebräuchliche Vakuumkalibriereinrichtungen, bei denen zwangsläufig Reibungskräfte zwischen der Extrudatoberfläche und den mit Vakuumöffnungen versehenen, gekühlten Metallplatten der Kalibriereinrichtung auftreten, haben eine Reihe von Nachteilen.

Das Gleiten des Extrudats auf der Kalibrierung führt, insbesondere bei kratzempfindlichen Kunststoffen, zu einem Verkratzen der Extrudatoberfläche und gegebenenfalls noch zu weiteren Störungen durch den sich ansammelnden Abrieb.

Der Wechsel von Haften und Gleiten ("stick-slip") zwischen Extrudat und Kalibrierung führt zu einem ungleichmäßigen Abzug des Extrudats und dadurch zu Dickenschwankungen in Extrusionsrichtung, die sich als Welligkeit des Hohlkammerprofils bemerkbar machen. Diese Welligkeit führt zu einer Beeinträchtigung der Durchsicht von Stegplatten aus transparentem Kunststoff.

Die abkühlungsbedingte Schwindung der Stege beim Durchlaufen der Stegplatte durch die Kalibrierung und das Anpressen des Ober- und Untergurts an die Kalibrierungsoberfläche kann zur Bildung von Einfallstellen im Bereich der Stege führen. Dabei gilt, daß diese Einfallstellen um so ausgeprägter sind, je höher die Temperaturdifferenz der Stege zwischen Ein- und Austritt der Kalibrierung ist, je geringer der Unterdruck ist und je dicker die Stege sind.

Hoher Unterdruck, wie er für einen guten Wärmeübergang zwischen der Kalibrierung und der Gurtoberfläche und zur Vermeidung von Einfallstellen wünschenswert ist, führt aufgrund der Reibungskräfte zwischen Kalibrierung und Extrudat zu hohen Abzugskräften, die im Extremfall zum Abreißen des Extrudats zwischen Kalibrierung und Abzugseinrichtung führen können. Auch kann es zu einem Durchrutschen der Abzugswalzen auf der Extrudatoberfläche kommen. Die Folge wäre der Zusammenbruch des Extrusionsprozesses. Um ein solches Durchrutschen auch bei hohem Unterdruck zu vermeiden, sind aufwendige Mehrwalzenkonstruktionen erforderlich.

Die erreichbare Abzugsgeschwindigkeit mit einer Vakuumtrockenkalibrierung ist durch die maximal zulässige Temperaturdifferenz zwischen dem Extrudat beim Austritt aus der Extrusionsdüse und der Kalibrierung begrenzt, da zu hohe Temperaturdifferenzen zur Bildung von Eigenspannungen im Extrudat führen. Eine Verlängerung der Kalibriereinrichtung als Alternative zur Erhöhung der Abzugsgeschwindigkeit ist wiederum aufgrund der ansteigenden Abzugskräfte problematisch.

### Aufgabe und Lösung

Es wurde als Aufgabe gesehen, eine verbesserte Vorrichtung zur Kalibrierung von Hohlkammerplatten-Extrudatsträngen aus thermoplastischem Kunststoff bereitzustellen.

Die Aufgabe wird gelöst durch eine Vorrichtung zur Kalibrierung von Hohlkammerplatten-Extrudatsträngen aus thermoplastischem Kunststoff bestehend aus einem evakuierbaren Gehäuse (1) mit einem plattenförmigen Einlaufbereich (2), Stützrollen (3) und einem plattenförmigen Auslaufbereich (4).

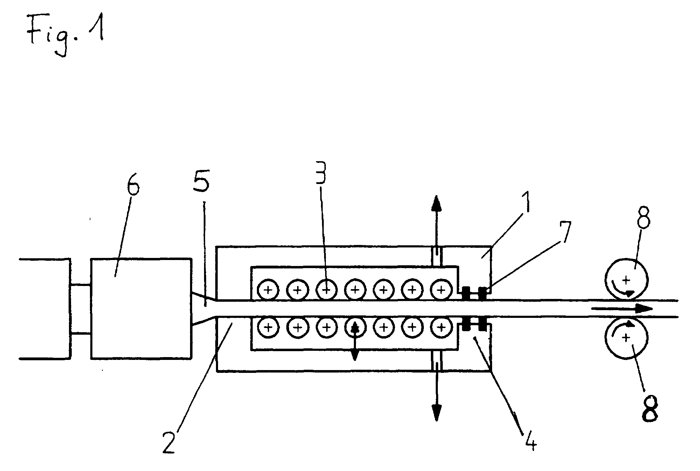

### Fig. 1 zeigt eine erfindungsgemäße Anordnung.

Ein Hohlkammerplatten-Extrudatstrang aus thermoplastischem Kunststoff (5) wird aus einer Extrusionsdüse (6) ausgestoßen und durch den plattenförmigen Einlaufbereich (2) zwischen den Stützrollen (3) hindurch und durch den plattenförmigen Auslaufbereich (4) mit flexiblen Dichtungen (7) heraus durch das evakuierbare Gehäuse (1) der Kalibriervorrichtung mittels zweier Abzugwalzen (8) gezogen.

### Ausführung der Erfindung

Die erfindungsgemäße Vorrichtung befindet sich in kurzem Abstand hinter der von einem Extruder gespeisten Extrusionsdüse und besteht aus einem evakuierbaren Gehäuse (1) mit einem plattenförmigen Einlaufbereich (2), Stützrollen (3) und einem plattenförmigen Auslaufbereich (4). Der Einlaufbereich (2), die Stützrollen (3) und der plattenförmige Auslaufbereich (4) bilden dabei einen Kanal durch den der extrudierte Hohlkammerplatten-Extrudatstrang hindurchgezogen, gestützt und gekühlt wird. Die Zugkräfte werden in an sich bekannter Weise von einer üblichen Abzugsvorrichtung, z. B. einem Abzugswalzenpaar (8), bewirkt. Es ist aber auch möglich, die Stützrollen selbst mit einem Antrieb zu versehen oder beides zu kombinieren.

Der plattenförmige Einlaufbereich (2) dient dem Abkühlen der Oberfläche des Extrudatstrangs unter die Erweichungstemperatur des Kunststoffs. Ein beispielsweise mit einer Temperatur von 260 °C aus der Extrusionsdüse austretender Strang aus Polymethylmethacrylat-Kunststoff wird dabei auf ca. 110 °C abgekühlt. Desweiteren dient der Einlaufbereich zur Abdichtung des im Gehäuse (1) anliegenden Unterdrucks gegen die Umgebung.

Das Gehäuse (1) muß zumindest im oberen Teil evakuierbar sein, um ein Einfallen des Hohlkammerplattenprofils, z. B. einer Stegdoppelplatte, unter dem Eigengewicht des Obergurts und der Stege zu vermeiden. Dabei genügt das Anlegen eines relativ geringen Unterdrucks von z. B. 10 bis 100 Pa. Zweckmäßigerweise wird auch die der Extrudatunterseite zugewandte untere Hälfte evakuiert, um auch die Bildung von Einfallstellen durch abkühlungsbedingte Kontraktion der Stege sicher zu vermeiden.

Die Stützrollen (3) sind oberhalb und unterhalb des Kanals für den Extrudatstrang angeordnet. Sie stützen den extrudierten Hohlkammerplattenstrang gegen den am Gehäuse anliegenden Unterdruck ab. Sie sind zweckmäßigerweise in der Höhe verstellbar. Dies hat den Vorteil, daß die Abstützung der Extrudatoberfläche genau dem Verlauf der Schwindung der Stege im Zuge der fortschreitenden Abkühlung angepaßt werden kann.

Die Kühlung der Extrudatoberfläche erfolgt durch Kühlung der Stützrollen (3) durch Sprühkühlung der Extrudatoberfläche oder durch Fluten des gesamten Gehäuses (1) mit Wasser (Naßkalibrierung). Unter Umständen ist auch eine Kühlung des Gehäuses (1) und Wärmeübertragung durch Strahlung und Konvektion ausreichend.

Der plattenförmige Auslaufbereich (4) dient wie auch der Einlaufbereich (2) zur Abdichtung der Kalibriervorrichtung. Der Auslaufbereich kann gegebenenfalls in der Höhe verstellbar ausgeführt sein oder auch mit flexiblen Dichtleisten (7), z. B. aus Polytetrafluorethylen (PTFE) oder anderen temperaturbeständigen Kunststoffen mit guten Gleiteigenschaften, ausgestattet sein. Vorteilhafte Wirkungen der Erfindung

Auf einer Extrusionsanlage, die eine erfindungsgemäße Kalibriervorrichtung aufweist, können Hohlkammerplatten aus thermoplastischem Kunststoff von hoher Qualität hergestellt werden.

Die erfindungsgemäße Kalibriervorrichtung eignet sich im Prinzip für Hohlkammerplatten und Kunststoffe aller Art. Besondere Vorteile ergeben sich bei Stegmehrfachplatten und Stegdoppelplatten aus Polymethylmethacrylat und aus Polycarbonat oder anderen transparenten Kunstoffen. Hier wird eine bessere Durchsicht der Hohlkammerprofile durch Vermeidung des Verkratzens der Profiloberfläche erreicht. Zusätzlich werden wellenförmige Dickenschwankungen bei der Gurtdicke weitgehend vermieden, die aufgrund des Linseneffektes zu einer unerwünschten Ablenkung der durchtretenden Lichtstrahlen führen. Die Kalibriervorrichtung kann in den Abmessung beliebig allen Extrusionsanlagen bzw. allen Hohlkammerplatten-Extrusionsdüsen angepaßt werden.

Aufgrund der geringen Reibungskräfte in der Kalibriervorrichtung sind auch die notwendigen Abzugskräfte vergleichsweise klein. Dadurch wird es möglich, Stegplatten mit wenigen oder sehr dünnen Stegen herzustellen, die nur geringen Abzugskräften standhalten.

Durch die Vermeidung von Gleitvorgängen werden Beschädigungen der Extrudatoberfläche vermieden. Der nachteilige Wechsel von Haftung und Gleiten ("Stick-Slip") gebräuchlicher Vakuumkalibiereinrichtung kann nicht auftreten. Die hergestellten Hohlkammerplatten sind nahezu völlig frei von Welligkeiten und Einfallstellen im Bereich der Stege.

Aufgrund der insgesamt geringen Reibungskräfte in der Kalibriervorrichtung ist es möglich, auch deutlich längere als die üblicherweise eingesetzten Anlagen zu realisieren.

## Patentansprüche

1. Vorrichtung zur Kalibrierung von Hohlkammerplatten-Extrudatsträngen **für Stegplatten** aus thermoplastischem Kunststoff, bestehend aus einem evakuierbaren Gehäuse (1) mit einem plattenförmigen Einlaufbereich (2), Stützrollen (3), und einem plattenförmigen Auslaufbereich (4), **wobei der plattenförmige Einlaufbereich (2), die Stützrollen (3) und der plattenförmige Auslaufbereich (4) einen Kanal bilden durch den ein extrudierter Hohlkammerplattenstrang hindurchgezogen, gestützt und gekühlt werden kann und wobei die Stützrollen (3) oberhalb und unterhalb des extrudierten Hohlkammerplattenstrangs so angeordnet sind, daß sie diesen gegen den am Gehäuse (1) anliegenden Unterdruck abstützen.**

2. Vorrichtung nach Anspruch 1, **dadurch gekennzeichnet, daß** die Stützrollen in der Höhe verstellbar sind.

3. Vorrichtung nach Anspruch 1, **dadurch gekennzeichnet, daß** die Stützrollen kühlbar sind.

4. Vorrichtung nach Anspruch 1, **dadurch gekennzeichnet, daß** die Stützrollen mit einem Antrieb versehen sind.

5. Vorrichtung nach Anspruch 1, **dadurch gekennzeichnet, daß** der plattenförmige Auslaufbereich (4) mit flexiblen Dichtleisten (7) aus einem hochwärmebeständigen Kunststoff versehen ist.

6. **Verwendung einer Vorrichtung nach einem oder mehreren der Ansprüche 1 bis 5 zur Kalibrierung von Hohlkammerplatten-Extrudatsträngen für Stegplatten.**

## Claims

1. Apparatus for calibrating extruded lengths of cellular sheet for web sheets made of thermoplastic synthetic material, consisting of an evacuatable housing (1) having a plate-shaped entry area (2), support rollers (3) and a plate-shaped exit area (4), wherein the plate-shaped entry area (2), the support rollers (3) and the plate-shaped exit area (4) form a channel through which an extruded length of cellular sheet can be drawn, supported and cooled, and wherein the support rollers (3) are arranged above and below the extruded length of cellular sheet in such a way that they support it against the vacuum applied to the housing (1).

2. Apparatus according to claim 1, **characterised in that** the support rollers are adjustable in height.

3. Apparatus **characterised in that** the support rollers are coolable.

4. Apparatus according to claim 1, **characterised in that** the support rollers are provided with a drive.

5. Apparatus according to claim 1, **characterised in that** the plate-shaped exit area (4) is provided with flexible sealing strips (7) of a highly heat resistant plastic.

6. Use of an apparatus according to one or more of claims 1 to 5 for calibrating extruded lengths of cellular sheet for web sheets.

## Revendications

1. Dispositif de calibrage de profilés creux devant former des plaques à barrettes en matière thermoplastique, comprenant un boîtier (1) pouvant être mis en dépression, une zone d'entrée en forme de plaque (2), des galets de soutien (3) et une zone de sortie en forme de plaque (4),
**caractérisé en ce que**
la zone d'entrée (2), les galets de soutien (3) et la zone de sortie (4) forment un canal à travers lequel le profilé de plaque creuse extrudé peut être tiré, soutenu et refroidi, les galets de soutien (3) étant disposés au-dessus et au-dessous du profilé creux extrudé de manière à soutenir celui-ci contre l'action de la dépression existant dans le boîtier (1).

2. Dispositif selon la revendication 1,
**caractérisé en ce que**
les galets de soutien sont réglables en hauteur.

3. Dispositif selon la revendication 1,
**caractérisé en ce que**
les galets de soutien peuvent être refroidis.

4. Dispositif selon la revendication 1,
**caractérisé en ce que**
les galets de soutien sont équipés d'un entraînement.

5. Dispositif selon la revendication 1,
**caractérisé en ce que**
la zone de sortie (4), en forme de plaque, est équipée de barrettes d'étanchéité (7) flexibles faites d'une matière plastique résistant aux températures élevées.

6. Utilisation d'un dispositif selon une ou plusieurs des revendications 1 à 5, pour calibrer des profilés creux extrudés devant former des plaques à barrettes.
